# EUROPEAN PATENT APPLICATION

(11) **EP 4 685 943 A1**
(43) Date of publication of application: **28.01.2026**
(21) Application number: 24892900.2
(22) Date of filing: 09.08.2024
(51) Int. Cl.: H01M 50/166

(54) **BATTERY CELL, BATTERY, AND ELECTRIC DEVICE**

(30) Priority: 20.11.2023 CN 202323130406 U
(71) Applicant: Contemporary Amperex Technology Co., Limited, Ningde, Fujian 352100 (CN)
(72) Inventor: HUANG, Zhongbao, Ningde, Fujian 352100 (CN); LIN, Jie, Ningde, Fujian 352100 (CN); HUANG, Biao, Ningde, Fujian 352100 (CN); WEI, Yong, Ningde, Fujian 352100 (CN); WANG, Zhongliang, Ningde, Fujian 352100 (CN); CAO, Guoxun, Ningde, Fujian 352100 (CN); QIU, Wen, Ningde, Fujian 352100 (CN)
(74) Representative: Ran, Handong
(86) International application number: PCT/CN2024/111191
(87) International publication number: WO 2025/107736

(57) **Abstract**

A battery cell (20), a battery (100), and an electric device. The battery cell (20) comprises: a housing assembly (21), which comprises a housing (211) and a cover plate (212), wherein the housing (211) has an opening (211a), the cover plate (212) covers the opening (211a), the cover plate (212) has a peripheral side surface (212a), the peripheral side surface (212a) and/or the housing (211) is provided with a groove (24), a connecting portion (25) for sealing the opening (211a) is formed between the housing (211) and the cover plate (212), and the connecting portion (25) is at least partially accommodated in the groove (24); an electrode terminal (22), the electrode terminal (22) being arranged on the housing (211) or the cover plate (212); and an electrode assembly (23), the electrode assembly (23) being arranged in the housing (211) and being electrically connected to the electrode terminal (22).

## Description

### CROSS-REFERENCE TO RELATED APPLICATION

The present application is presented based on Chinese Patent Application No. 202323130406.5 filed on November 20, 2023, and claims the priority to the Chinese Patent Application, the content of which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and service life. However, during the manufacturing process of battery cells in the batteries, there is a reliability problem with the welding of the housing, which affects the overall reliability of the battery cells, thereby seriously affecting the use performance and service life of the batteries.

### SUMMARY

Embodiments of the present application provide a battery cell, a battery, and an electric device, which can effectively improve the reliability of the battery cell and the battery.

In a first aspect, the embodiments of the present application provide a battery cell. The battery cell includes: a housing assembly, including a housing and a cover plate, where the housing is provided with an opening, and the opening is lidded with the cover plate; the cover plate is provided with a peripheral side surface, and the peripheral side surface and/or the housing is provided with a groove; a connecting part for sealing the opening is formed between the housing and the cover plate, and the connecting part is at least partially accommodated in the groove; an electrode terminal, where the electrode terminal is arranged on the housing or the cover plate; and an electrode assembly, where the electrode assembly is arranged within the housing and electrically connected to the electrode terminal.

In the above technical solution, the groove is provided on the peripheral side surface of the cover plate and/or the housing. On the one hand, the groove can reduce the stamping tear zone area of the housing and/or the cover plate, reduce the impact of impurities in the stamping tear zone area on welding, and improve the welding quality and welding stability of the cover plate and the housing. On the other hand, the groove can accommodate the cast structure formed during the welding process, reducing the probability of the formation of weld reinforcement and flanging at the welding joint after welding, and can also provide pressure relief for metal vapor generated during subsequent welding, such that the welding quality and welding stability of the cover plate and the housing can be further improved. That is, adopting the above solution can improve the reliability of the housing assembly, thereby improving the reliability of the battery cell, improving the use performance of the battery cell, and prolonging the service life of the battery cell.

In some embodiments of the present application, an equally dividing plane that equally divides the cover plate in a thickness direction of the cover plate is defined, and the groove is located on one side of the equally dividing plane close to the outside of the cover plate. In the technical solution, the groove is closer to the outer side of cover plate, such that the connecting part formed between the cover plate and the housing is also adaptively closer to the outer side of cover plate, which is beneficial for reducing the depth of the gap close to the outer side between the cover plate and the housing, thereby reducing the content of substances such as dust or water in the gap, and reducing the impact of substances such as dust or water on the connecting part after a long period of time. This is also beneficial for improving the connection reliability between the cover plate and the housing, thereby improving the reliability of the battery cell.

In some embodiments of the present application, the groove is an annular groove provided in a circumferential direction of the cover plate. In the technical solution, by forming the groove as an annular groove provided in the circumferential direction of the cover plate, the stamping tear zone area can be uniformly removed in the circumferential direction of the housing and/or the cover plate. At the same time, this is also beneficial for removing a larger volume of the stamping tear zone area, thereby further reducing the impact of the stamping tear zone area on the welding of the housing and the cover plate, which is beneficial for improving the welding quality and welding stability of the housing and the cover plate.

In some embodiments of the present application, the peripheral side surface includes at least one facet, and each facet is provided with at least one groove; and/or the housing includes at least one inner side surface, and each inner side surface is provided with at least one groove.

In the above technical solution, if each facet of the peripheral side surface is provided with at least one groove, each facet may be partially grooved, and the remaining portion is not grooved. As a result, the stamping tear zone area of the cover plate can be reduced, and the impact of the groove on the edge strength of the cover plate can also be reduced, thereby improving the connection strength between the cover plate and the housing. If each inner side surface of the housing is provided with at least one groove, the inner side surface of the housing may be partially grooved, and the remaining portion is not grooved. As a result, the stamping tear zone area of the housing can be reduced, and the impact of the groove on the edge strength of the housing can also be reduced, thereby improving the connection strength between the housing and the cover plate.

In some embodiments of the present application, the groove is provided on the peripheral side surface. In the technical solution, by providing a groove on the cover plate, while having the housing not grooved, the welding quality and welding reliability between the cover plate and the housing can be improved by reducing the stamping tear zone area on the cover plate. As a result, the weld reinforcement and flanging metal are reduced, while the lightweight and thin design of the housing is facilitated, that is, the wall thickness of the housing is made relatively small. Since the volume and dimension of the housing are larger compared to the cover plate, reducing the wall thickness of the housing is beneficial for reducing the volume of the battery cell and increasing the energy density of the battery cell.

In some embodiments of the present application, the groove is in communication with an outer side of the cover plate in the thickness direction of the cover plate.

In the above technical solution, since the groove is in communication with the outer side of the cover plate in the thickness direction of the cover plate, and the groove is provided with the groove opening located on the outer side of the cover plate, the groove opening facilitates the observation of the connecting part between the cover plate and the housing, thereby facilitating welding operations between the cover plate and the housing. Moreover, since the groove is in communication with the outer side of the cover plate, the metal vapor can be directly discharged to the outside when the cover plate and the housing are welded, which is beneficial for the smooth pressure relief of the metal vapor. In addition, since the connecting part is at least partially formed within the groove, after the cover plate and the housing are welded, the probability of a narrow gap occurring between the outer edge of the cover plate and the housing is relatively low, and impurities such as dust or water stains do not easily accumulate in the groove, thereby improving the connection reliability between the cover plate and the housing.

In some embodiments of the present application, the cover plate is provided with an extending part protruding from the peripheral side surface; the extending part is provided with a first surface close to an inner side of the cover plate, and the groove is provided with a second surface away from the inner side of the cover plate, the second surface being flush with the first surface.

In the above technical solution, since the cover plate is provided with the extending part protruding from the peripheral side surface, the cover plate can form a T-shaped structure. When the cover plate cooperates with the housing, the extending part can abut against the end surface of the housing, covering and sealing the gap between the peripheral side surface and the inner side surface of the housing, thereby reducing the probability of impurities such as dust and water stains in the external environment entering between the peripheral side surface and the inner side surface of the housing. The second surface of the groove is flush with the first surface of the extending part, such that the metal vapor can be introduced to the outside along the second surface and the first surface when the cover plate and the housing are welded, which is beneficial for the smooth pressure relief of the metal vapor.

In some embodiments of the present application, the housing is provided with a clearance recess, and the clearance recess is located on an outer side of the housing and arranged opposite to the groove. In the above technical solution, when the housing and the cover plate are welded, a loose cast structure is formed on the outer side of the housing due to high temperatures. Therefore, by adopting a structure in which the housing is provided with a clearance recess, the clearance recess can accommodate at least a portion of the cast structure, reducing the probability of the cast structure protruding from the outer side surface of the housing after cooling. This helps to reduce the probability of the occurrence of weld reinforcement and flanging metal, thereby improving the welding stability of the housing and the cover plate, and improving the welding quality.

In some embodiments of the present application, the housing is provided with a third surface opposite to the peripheral side surface, and the clearance recess is provided with an clearance surface; the clearance surface is connected to the third surface, and in a direction from inside to outside of the cover plate, a distance between the clearance surface and the third surface gradually increases.

In the above technical solution, by configuring the clearance recess to be provided with the clearance surface, in the direction from inside to outside of the cover plate, the distance between the clearance surface and the third surface of the housing gradually increases. The clearance recess is configured as an inclined surface on the housing, which helps to reduce the processing difficulty of the clearance recess. Moreover, the clearance surface can adapt to the distribution of the cast structure when the housing is welded, which can reduce the probability of the insufficient strength of the housing caused by the clearance surface not being covered and filled.

In some embodiments of the present application, the connecting part has a depth direction and a width direction; in the depth direction, a dimension of the groove is denoted as D₁, and in the width direction, a dimension of the groove is denoted as W₁, where a thickness of the cover plate is denoted as T₁, W₁ = (0.5-1.2) T₁, and D₁ = (0.5-1.0) T₁.

In the above technical solution, by setting the dimensions D₁ and W₁ of the groove as well as the thickness T₁ of the cover plate so that W₁ is within the range of 0.5 T₁ to 1.2 T₁ and D₁ is within the range of 0.5 T₁ to 1.0 T₁, the groove width and the groove depth of the groove can be kept in appropriate ranges, such that the volume of the stamping tear zone removed from the cover plate is relatively appropriate. Furthermore, the effect of reducing the impact of impurities in the stamping tear zone area on welding is better, and the effect of pressure relief for metal vapor is also better. At the same time, the effect of alleviating the problem of weld reinforcement and flanging metal is also better.

In a second aspect, the embodiments of the present application further provide a battery. The battery includes the foregoing battery cell.

In the above technical solution, for the battery cell, by providing a groove on the housing and/or the cover plate, the stamping tear zone area on the housing and/or the cover plate can be reduced, and the probability of the formation of weld reinforcement and flanging at the welding joint after welding can be reduced. In addition, pressure relief can be provided for metal vapor formed during subsequent welding, which is beneficial for improving the welding quality and welding stability of the cover plate and the housing, thereby improving the reliability of the battery cell.

In a third aspect, the embodiments of the present application further provide an electric device. The electric device includes the foregoing battery cell or the foregoing battery.

In the above technical solution, for the battery cell or the battery, by providing the groove on the housing and/or the cover plate, the stamping tear zone area on the housing and/or the cover plate can be reduced, and the probability of the formation of weld reinforcement and flanging at the welding joint after welding can be reduced. In addition, pressure relief can be provided for metal vapor formed during subsequent welding, which is beneficial for improving the reliability of the battery cell or the battery, thereby improving the reliability of the electric device.

### BRIEF DESCRIPTION OF THE DRAWINGS

To more clearly illustrate the technical solutions in the embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a structure of a battery according to some embodiments of the present application;
FIG. 3 is a schematic diagram of an internal structure of a battery cell according to some embodiments of the present application;
FIG. 4 is a schematic structural diagram of a cover plate according to some embodiments of the present application;
FIG. 5 is a partial enlarged schematic diagram of FIG. 3;
FIG. 6 is a schematic diagram of an internal structure of a battery cell according to some other embodiments of the present application;
FIG. 7 is a schematic structural diagram of a cover plate according to some other embodiments of the present application; and
FIG. 8 is a partial enlarged schematic diagram of FIG. 6.

Reference numerals: 1000: vehicle; 100: battery; 10: case; 11: first case body; 12: second case body; 20: battery cell; 21: housing assembly; 211: housing; 211a: opening; 211b: third surface; 2111: clearance recess; 2111a: clearance surface; 212: cover plate; 212a: peripheral side surface; 2121: extending part; 2121a: first surface; 22: electrode terminal; 23: electrode assembly; 24: groove; 24a: second surface; 25: connecting part; 26: equally dividing plane; 200: controller; 300: motor; X: first direction; Y: second direction.

### DETAILED DESCRIPTION

To make the objectives, technical solutions, and advantages of the embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" should be interpreted in their broad senses. For example, they may refer to a fixed connection, a detachable connection, or an integrated connection; or a direct connection, an indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are typically divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module group, a battery pack, or the like. A battery generally includes a case configured to encapsulate one or a plurality of battery cells or a plurality of battery module groups. The case can prevent liquid or other foreign matter from affecting the charging or discharging of the battery cells.

A battery cell includes a housing, an electrode assembly, and an electrolyte, and the housing is configured to accommodate the electrode assembly and the electrolyte. The electrode assembly consists of a positive electrode plate, a negative electrode plate, and a separator. A battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, there are a plurality of positive electrode tabs that are stacked together, and there are a plurality of negative electrode tabs that are stacked together.

The material of the separator may be polypropylene (PP), polyethylene (PE), or the like. In addition, the electrode assembly may be of a winding structure or a stacking structure, but the embodiments of the present application are not limited thereto.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and cycle service life.

In a general battery cell, the housing assembly includes a housing and a cover plate lidding the housing, and the housing and the cover plate are generally formed through multiple times of stamping operations. During the stamping and forming process, some tear zones are present on the housing and the cover plate, and the tear zone area is often prone to trapping impurities such as metal chips and oil stains. Due to the presence of the impurities, defects such as pores and blowholes may be caused during the welding and assembly process of the housing and the cover plate, thereby increasing production costs. In another aspect, during the welding process, the dense forged structure of the housing and the cover plate is re-melted, cooled, and crystallized to form a loose cast structure. That is, the welded structure formed after the housing and the cover plate are welded has a larger volume per unit mass, resulting in weld reinforcement and flanging phenomena at the weld seam after welding. At present, roller pressing is used in the manufacturing of battery cells to improve flanging. However, for a thin aluminum housing, excessive roller pressing easily leads to an excessively thin housing, thereby easily causing the problem of liquid leakage at the ends, and affecting the reliability of the battery cells. However, if roller pressing is not performed, the excessive flanging during the service of the battery cell can cause the blue film of the battery cell to wear out, leading to insulation failure, which also affects the reliability of the battery cell.

Based on the above considerations, to address the defects such as the presence of pores and blowholes during the welding of the housing and the cover plate in the manufacturing process of the battery cells, as well as the weld reinforcement and flanging phenomena after welding, the inventors have designed a battery cell. The battery cell includes a housing assembly, an electrode terminal, and an electrode assembly. The housing assembly includes a housing and a cover plate. The housing is provided with an opening, and the opening is lidded with the cover plate; the cover plate is provided with a peripheral side surface, and the peripheral side surface and/or the housing is provided with a groove. A connecting part for sealing the opening is formed between the housing and the cover plate, and the connecting part is at least partially accommodated in the groove. The electrode terminal is arranged on the housing or the cover plate; the electrode assembly is arranged within the housing and is electrically connected to the electrode terminal.

In the battery cell of this structure, by providing the groove on the peripheral side surface of the cover plate and/or the housing, forming the connecting part for sealing the opening between the housing and the cover plate, and having the connecting part at least partially accommodated in the groove, the groove can reduce the volume of the stamping tear zone area of the housing and/or the cover plate. On the one hand, adopting the structure can reduce impurities such as metal chips and oil stains during the welding process of the housing and the cover plate, and reduce the probability of causing defects such as pores and blowholes during the welding process. On the other hand, the groove can accommodate the cast structure formed during the welding process, alleviate the problems of the formation of weld reinforcement and flanging at the welding joint after welding, or reduce the probability of the formation of weld reinforcement and flanging at the welding joint after welding. In addition, an effective metal vapor pressure relief groove can also be provided for subsequent welding, which is beneficial for improving the welding stability. That is, adopting the above solution is beneficial for improving the reliability of the housing assembly, thereby improving the reliability of the battery cell, improving the use performance of the battery cell, and prolonging the service life of the battery cell.

The battery disclosed in the embodiments of the present application may, but is not limited to, be used in electric devices such as vehicles, ships, or aircraft. The power system of the electric device may be composed of the battery cell, the battery, and the like disclosed in the present application.

The embodiments of the present application provide an electric device using a battery as a power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000 as an example of the electric device according to an embodiment of the present application.

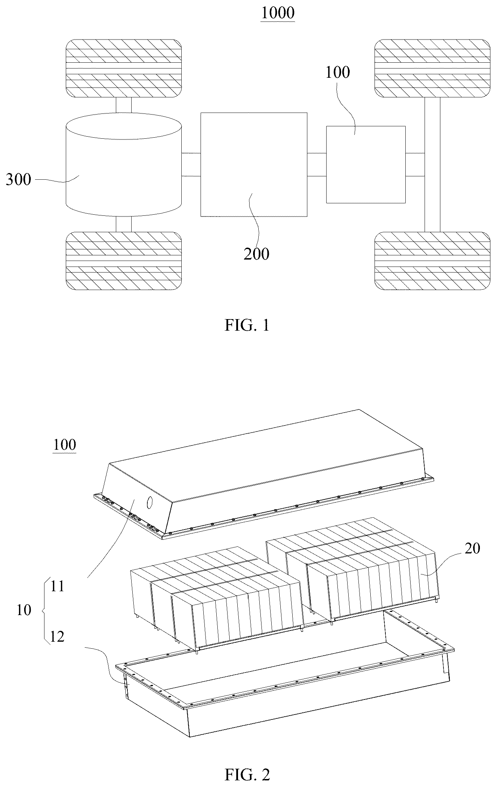

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is arranged inside the vehicle 1000, and the battery 100 may be arranged at the bottom, head, or tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000, replacing or partially replacing fuel or natural gas, to provide driving power for the vehicle 1000.

Referring to FIG. 2, FIG. 2 is an exploded view of the structure of a battery 100 according to some embodiments of the present application. The battery 100 includes a case 10 and a plurality of battery cells 20. The battery cells 20 are configured to be accommodated in the case 10. The case 10 is configured to provide an assembly space for the battery cells 20, and the case 10 may be in various structures. In some embodiments, the case 10 may include a first case body 11 and a second case body 12. The first case body 11 and the second case body 12 are mutually lidded with each other. The first case body 11 and the second case body 12 jointly define an assembly space for accommodating the battery cells 20. The second case body 12 may be of a hollow structure with one end open, and the first case body 11 may be of a plate-shaped structure. The first case body 11 lids the open side of the second case body 12, such that the first case body 11 and the second case body 12 jointly define an assembly space; the first case body 11 and the second case body 12 may also both be of a hollow structure with one side open, and the open side of the first case body 11 lids the open side of the second case body 12. Certainly, the case 10 formed by the first case body 11 and the second case body 12 may be in various shapes, such as a cylinder and a rectangular parallelepiped.

In the battery 100, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving the electrical connection among the plurality of battery cells 20.

Referring to FIG. 2, in some embodiments of the present application, the battery 100 may include a plurality of rows of battery cells 20. The plurality of rows of battery cells 20 are arranged in the length direction of the case 10, and each row of battery cells 20 includes a plurality of battery cells 20 arranged in the width direction of the case 10. Alternatively, the plurality of rows of battery cells 20 are arranged in the width direction of the case 10, and each row of battery cells 20 includes a plurality of battery cells 20 arranged in the length direction of the case 10.

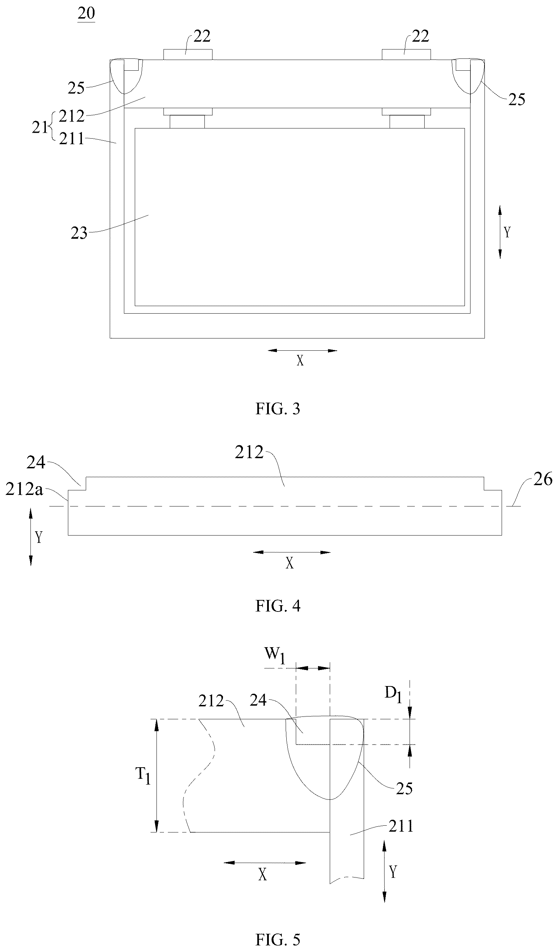

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes. Illustratively, in FIG. 3, the battery cell 20 is in the shape of a rectangular parallelepiped.

According to some embodiments of the present application, referring to FIG. 3, FIG. 3 shows a battery cell 20 according to the embodiments of the present application. The battery cell includes: a housing assembly 21, an electrode terminal 22, and an electrode assembly 23. The housing assembly 21 includes a housing 211 and a cover plate 212; the housing 211 is provided with an opening 211a, and the opening 211a is lidded with the cover plate 212; the cover plate 212 is provided with a peripheral side surface 212a, and the peripheral side surface 212a and/or the housing 211 is provided with a groove 24; a connecting part 25 for sealing the opening 211a is formed between the housing 211 and the cover plate 212, and the connecting part 25 is at least partially accommodated in the groove 24. The electrode terminal 22 is arranged on the housing 211 or the cover plate 212. The electrode assembly 23 is arranged within the housing 211 and is electrically connected to the electrode terminal 22.

The housing 211 is configured to accommodate the electrode assembly 23 and the electrolyte, and the cover plate 212 is configured to lid the opening 211a of the housing 211, sealing the housing 211. Optionally, the housing 211 may be, but is not limited to, an aluminum housing or a steel housing.

The electrode terminal 22 may refer to a component configured to be electrically connected to an external conductor or one pole of another adjacent battery cell 20 in the battery set. Specifically, the electrode terminal 22 can be understood as a post terminal. There may be at least two electrode terminals 22. At least one of the electrode terminals is a positive electrode terminal, and at least one of the electrode terminals is a negative electrode terminal, so as to connect to positive and negative electrodes of an external electrical connection equipment. For the electrode assembly 23, reference may be made to the foregoing specific descriptions, and details are not described herein again.

Because the housing 211 and the cover plate 212 are generally formed through multiple times of stamping, during the stamping and forming process, tear zones are present on the housing 211 and the cover plate 212, where the tear zone area of the cover plate 212 is concentrated on the peripheral side surface 212a, and the tear zone area of the housing 211 is concentrated on the end part proximal to the opening 211a. In the battery cell 20 of the above structure, by providing the groove 24 on the cover plate 212 and/or the housing 211, the tear zone area can be reduced.

Specifically, the groove 24 may be provided in an area of the peripheral side surface 212a used to form the connecting part 25 with the housing 211. By means of the solution, the tear zone area of the cover plate 212 can be reduced. Alternatively, the groove 24 is provided in an area of the housing 211 used to form the connecting part 25 with the cover plate 212. By means of the solution, the tear zone area of the housing 211 can be reduced. Alternatively, grooves 24 may be provided in areas where the housing 211 and the peripheral side surface 212a form the connecting part 25. By means of the solution, the tear zone area of the cover plate 212 and the tear zone area of the housing 211 can be reduced.

The connecting part 25 may refer to a joint portion formed after the peripheral side surface 212a of the cover plate 212 and the housing 211 are welded. The connecting part 25 may be partially accommodated in the groove 24, or the connecting part 25 may be entirely accommodated in the groove 24.

It can be understood that the groove 24 can reduce the stamping tear zone area of the housing 211 and/or the cover plate 212. When the cover plate 212 and the housing 211 are welded, the groove 24 can reduce impurities such as metal chips and oil stains during the welding process, reduce the probability of causing defects such as pores and blowholes during the welding process, and improve the welding quality of the cover plate 212 and the housing 211.

In addition, the groove 24 further has an accommodating space. During the welding process of the cover plate 212 and the housing 211, the dense forged structure is melted and cooled to form a loose cast structure, and the cast structure generates excess flanging metal. In the present application, the flanging metal formed through welding may be partially or entirely located within the groove 24, reducing the probability of the flanging metal protruding from the cover plate 212 or the housing 211, thereby alleviating the problem of the formation of weld reinforcement and flanging metal after welding. Metal vapor may be formed during the welding process of the cover plate 212 and the housing 211, and the groove 24 may be used as a pressure relief groove for metal vapor pressure relief, such that the stability of the welding molten pool can be improved, and the welding stability of the cover plate 212 and the housing 211 can be improved.

In the above technical solution, the groove 24 is provided on the peripheral side surface 212a of the cover plate 212 and/or the housing 211. On the one hand, the groove 24 can reduce the stamping tear zone area of the housing 211 and/or the cover plate 212, reduce the impact of impurities in the stamping tear zone area on welding, and improve the welding quality and welding stability of the cover plate 212 and the housing 211. On the other hand, the groove 24 can accommodate the cast structure formed during the welding process, reducing the probability of the formation of weld reinforcement and flanging at the welding joint after welding, and can also provide pressure relief for metal vapor generated during subsequent welding, such that the welding quality and welding stability of the cover plate 212 and the housing 211 can be further improved. That is, adopting the above solution can improve the reliability of the housing assembly 21, thereby improving the reliability of the battery cell 20, improving the use performance of the battery cell 20, and prolonging the service life of the battery cell 20.

In some embodiments of the present application, referring to FIG. 4, an equally dividing plane 26 that equally divides the cover plate 212 in the thickness direction of the cover plate 212 is defined, and the groove 24 is located on one side of the equally dividing plane 26 close to the outside of the cover plate 212.

The "thickness direction of the cover plate 212" may refer to the second direction Y in FIG. 4.

In the above technical solution, the groove 24 is closer to the outer side of cover plate 212, such that the connecting part 25 formed between the cover plate 212 and the housing 211 is also adaptively closer to the outer side of cover plate 212, which is beneficial for reducing the depth of the gap close to the outer side between the cover plate 212 and the housing 211, thereby reducing the content of substances such as dust or water in the gap, and reducing the impact of substances such as dust or water on the connecting part 25 after a long period of time. This is also beneficial for improving the connection reliability between the cover plate 212 and the housing 211, thereby improving the reliability of the battery cell 20.

In some embodiments of the present application, the groove 24 is an annular groove provided in the circumferential direction of the cover plate 212.

When the housing 211 is provided with the groove 24, the groove 24 is an annular groove provided in the circumferential direction of the cover plate 212 on the housing 211, that is, the groove 24 is provided around the housing 211. When the cover plate 212 is provided with the groove 24, the groove 24 is an annular groove provided in the circumferential direction of the cover plate 212 on the peripheral side surface 212a, that is, the groove 24 is provided around the cover plate 212.

Optionally, on the sectional plane in the thickness direction of the cover plate 212, the cross section of the annular groove may be, but is not limited to, rectangular, semicircular, or arc-shaped. Illustratively, referring to FIGs. 3 to 8, the cross section of the annular groove is rectangular.

In the groove 24 of the above structure, on the one hand, the groove 24 is an annular groove, such that the stamping tear zone area in the circumferential direction of the housing 211 and/or the cover plate 212 can be uniformly reduced, and as a result, the consistency of the connecting part 25 in the circumferential direction between the housing 211 and the cover plate 212 is relatively good. This can improve the welding quality and welding stability of the housing 211 and the cover plate 212. In addition, the groove 24 being an annular groove is also beneficial for removing a larger volume of the stamping tear zone area from the housing 211 and/or the cover plate 212, and reducing the impact of impurities in the stamping tear zone area on the welding between the housing 211 and the cover plate 212, thereby improving the welding quality and welding stability. On the other hand, the groove 24 being annular makes it relatively simple to process on the housing 211 and/or the cover plate 212, which can reduce the forming steps of the groove 24, thereby saving labor hours and improving work efficiency.

In the above technical solution, by forming the groove 24 as an annular groove provided in the circumferential direction of the cover plate 212, the stamping tear zone area can be uniformly removed in the circumferential direction of the housing 211 and/or the cover plate 212. At the same time, this is also beneficial for removing a larger volume of the stamping tear zone area, thereby further reducing the impact of the stamping tear zone area on the welding of the housing 211 and the cover plate 212, which is beneficial for improving the welding quality and welding stability of the housing 211 and the cover plate 212.

In some embodiments of the present application, the peripheral side surface 212a includes at least one facet, and each facet is provided with at least one groove 24. Additionally/alternatively, the housing 211 includes at least one inner side surface, and each inner side surface is provided with at least one groove 24.

The housing 211 may be a polygonal housing. For example, the housing 211 may be, but is not limited to, a triangular housing, a quadrilateral housing, or a pentagonal housing, and each side of the housing 211 corresponds to one inner side surface. Correspondingly, the shape of the cover plate 212 is the same as the shape of the housing 211. The cover plate 212 may be, but is not limited to, a triangle, a quadrilateral, or a pentagon. The number of facets of the peripheral side surface 212a is equal to the number of inner side surfaces of the housing 211. Illustratively, the housing 211 is a quadrilateral housing. The housing 211 includes four inner side surfaces, and the peripheral side surface 212a includes four facets.

When the peripheral side surface 212a is provided with the groove 24, each facet of the peripheral side surface 212a is provided with at least one groove 24, that is, each facet may be provided with one or more grooves 24. By this method, on the one hand, the groove 24 can remove a portion of the stamping tear zone area from the peripheral side surface 212a, thereby reducing the impact of the stamping tear zone area of the cover plate 212 on welding. On the other hand, the proportion of the groove 24 on the peripheral side surface 212a is not too large, that is, a portion of the peripheral side surface 212a is not grooved, which is beneficial for reducing the impact of grooving on the strength of the peripheral side of the cover plate 212, thereby improving the connection strength between the cover plate 212 and the housing 211.

When the housing 211 is provided with the groove 24, each inner side surface is provided with at least one groove 24, that is, each inner side surface may be provided with one or more grooves 24. By this method, on the one hand, the groove 24 can remove a portion of the stamping tear zone area from the housing 211, thereby reducing the impact of the stamping tear zone area of the housing 211 on welding. On the other hand, the proportion of the groove 24 on the housing 211 is not too large, that is, a portion of the inner side surface of the housing 211 is not grooved, which is beneficial for reducing the impact of grooving on the strength of the peripheral side of the housing 211, thereby improving the connection strength between the housing 211 and the cover plate 212.

When both the peripheral side surface 212a and the housing 211 are provided with the groove 24, each facet of the peripheral side surface 212a is provided with at least one groove 24, and each inner side surface is provided with at least one groove 24. By this method, on the one hand, the groove 24 can remove a portion of the stamping tear zone area from both the housing 211 and the cover plate 212. At the same time, the impact of grooving on the strength of the housing 211 and the cover plate 212 can also be reduced, which is beneficial for improving the connection strength between the housing 211 and the cover plate 212.

In the above technical solution, if each facet of the peripheral side surface 212a is provided with at least one groove 24, each facet may be partially grooved, and the remaining portion is not grooved. As a result, the stamping tear zone area of the cover plate 212 can be reduced, and the impact of the groove 24 on the edge strength of the cover plate 212 can also be reduced, thereby improving the connection strength between the cover plate 212 and the housing 211. If each inner side surface of the housing 211 is provided with at least one groove 24, the inner side surface of the housing 211 may be partially grooved, and the remaining portion is not grooved. As a result, the stamping tear zone area of the housing 211 can be reduced, and the impact of the groove 24 on the edge strength of the housing 211 can also be reduced, thereby improving the connection strength between the housing 211 and the cover plate 212.

In some embodiments of the present application, referring to FIGs. 3, 5, 6, and 8, the groove 24 is provided on the peripheral side surface 212a.

It can be understood that the peripheral side surface 212a of the cover plate 212 is provided with the groove 24, while the inner side surface of the housing 211 is not grooved. In addition, the groove 24 may be an annular groove provided on the peripheral side surface 212a. Alternatively, each facet of the peripheral side surface 212a is provided with one or more grooves 24.

In the above technical solution, by providing the groove 24 on the cover plate 212, while having the housing 211 not grooved, the welding quality and welding reliability between the cover plate 212 and the housing 211 can be improved by reducing the stamping tear zone area on the cover plate 212. As a result, the weld reinforcement and flanging metal are reduced, while the lightweight and thin design of the housing 211 is facilitated, that is, the wall thickness of the housing 211 is made relatively small. Since the volume and dimension of the housing 211 are larger compared to the cover plate 212, reducing the wall thickness of the housing 211 is beneficial for reducing the volume of the battery cell 20 and increasing the energy density of the battery cell 20.

In some embodiments of the present application, referring to FIGs. 3 to 5, the groove 24 is in communication with the outer side of the cover plate 212 in the thickness direction of the cover plate 212. It can be understood that the groove 24 is provided with two groove openings. One of the two groove openings is located on the peripheral side surface 212a, and the other is located on the outer side surface of the cover plate 212.

In the above technical solution, since the groove 24 is in communication with the outer side of the cover plate 212 in the thickness direction of the cover plate 212, and the groove 24 is provided with the groove opening located on the outer side of the cover plate 212, the groove opening facilitates the observation of the connecting part 25 between the cover plate 212 and the housing 211, thereby facilitating welding operations between the cover plate 212 and the housing 211. Moreover, since the groove 24 is in communication with the outer side of the cover plate 212, the metal vapor can be directly discharged to the outside when the cover plate 212 and the housing 211 are welded, which is beneficial for the smooth pressure relief of the metal vapor. In addition, since the connecting part 25 is at least partially formed within the groove 24, after the cover plate 212 and the housing 211 are welded, the probability of a narrow gap occurring between the outer edge of the cover plate 212 and the housing 211 is relatively low, and impurities such as dust or water stains do not easily accumulate in the groove 24, thereby improving the connection reliability between the cover plate 212 and the housing 211.

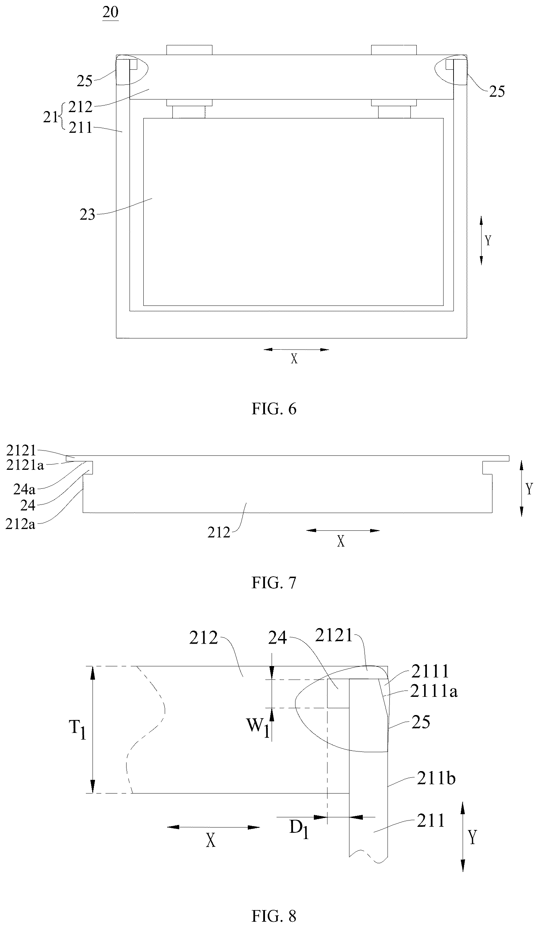

In some embodiments of the present application, referring to FIGs. 6 to 8, the cover plate 212 is provided with an extending part 2121 protruding from the peripheral side surface 212a; the extending part 2121 is provided with a first surface 2121a close to the inner side of the cover plate 212, and the groove 24 is provided with a second surface 24a away from the inner side of the cover plate 212. The second surface 24a is flush with the first surface 2121a.

In the above technical solution, since the cover plate 212 is provided with the extending part 2121 protruding from the peripheral side surface 212a, the cover plate 212 can form a T-shaped structure. When the cover plate 212 cooperates with the housing 211, the extending part 2121 can abut against the end surface of the housing 211, covering and sealing the gap between the peripheral side surface 212a and the inner side surface of the housing 211, thereby reducing the probability of impurities such as dust and water stains in the external environment entering between the peripheral side surface 212a and the inner side surface of the housing 211. The second surface 24a of the groove 24 is flush with the first surface 2121a of the extending part 2121, such that the metal vapor can be introduced to the outside along the second surface 24a and the first surface 2121a when the cover plate 212 and the housing 211 are welded, which is beneficial for the smooth pressure relief of the metal vapor.

In some embodiments of the present application, referring to FIG. 8, the housing 211 is provided with a clearance recess 2111, and the clearance recess 2111 is located on the outer side of the housing 211 and arranged opposite to the groove 24.

The clearance recess 2111 may refer to a recessed area on the outer side of the housing 211 and opposite to the groove 24. Specifically, the clearance recess 2111 may be, but is not limited to, a groove or chamfer.

In the above technical solution, when the housing 211 and the cover plate 212 are welded, a loose cast structure is formed on the outer side of the housing 211 due to high temperatures. Therefore, by adopting a structure in which the housing 211 is provided with a clearance recess 2111, the clearance recess 2111 can accommodate at least a portion of the cast structure, reducing the probability of the cast structure protruding from the outer side surface of the housing 211 after cooling. This helps to reduce the probability of the occurrence of weld reinforcement and flanging metal, thereby improving the welding stability of the housing 211 and the cover plate 212, and improving the welding quality.

In some embodiments of the present application, referring to FIG. 8, the housing 211 is provided with a third surface 211b opposite to the peripheral side surface 212a; the clearance recess 2111 is provided with a clearance surface 2111a, and the clearance surface 2111a is connected to the third surface 211b. In the direction from inside to outside of the cover plate 212, the distance between the clearance surface 2111a and the third surface 211b gradually increases.

It can be understood that when the housing 211 and the cover plate 212 are welded, the cast structure, which is formed on the outer side surface of the housing 211 due to high temperatures, covers the clearance surface 2111a and fills the missing portion at the location of the clearance surface 2111a on the housing 211, thereby reducing the probability of the weld reinforcement and flanging metal formed during welding protruding from the outer side surface of the housing 211. Adopting the method of providing a clearance surface 2111a on the housing 211 is relatively simple, facilitates forming and manufacturing, and helps to reduce costs.

In the direction from inside to outside of the cover plate 212, the distance between the clearance surface 2111a and the third surface 211b gradually increases, which can be understood as the clearance surface 2111a being an inclined surface. As the temperature gradually decreases in the area farther from the welding position on the housing 211, the formed cast structure becomes smaller, and the volume of the weld reinforcement and flanging metal is also relatively small. Therefore, by adopting the technical solution, it is possible to accommodate the distribution of the cast structure on the housing 211. A greater amount of weld reinforcement and flanging metal on the housing 211 covers the side of the clearance surface 2111a close to the cover plate 212, while a smaller amount of weld reinforcement and flanging metal covers the other side of the clearance surface 2111a away from the cover plate 212, which can reduce the probability of the insufficient strength of the housing 211 caused by the clearance surface 2111a not being covered and filled.

Optionally, referring to FIG. 8, the clearance surface 2111a may be connected to the end surface of the housing 211 close to the cover plate 212. By adopting the technical solution, the clearance surface 2111a is connected to the end surface of the cover plate 212, which is conducive to the processing and manufacturing of the clearance surface 2111a and can improve manufacturability. Illustratively, the end face of the housing 211, close to the cover plate 212, is a top end surface.

In the above technical solution, by configuring the clearance recess 2111 to be provided with the clearance surface 2111a, in the direction from inside to outside of the cover plate 212, the distance between the clearance surface 2111a and the third surface 211b of the housing 211 gradually increases. The clearance recess 2111 is configured as an inclined surface on the housing 211, which helps to reduce the processing difficulty of the clearance recess 2111. Moreover, the clearance surface 2111a can adapt to the distribution of the cast structure when the housing 211 is welded, which can reduce the probability of the insufficient strength of the housing 211 caused by the clearance surface 2111a not being covered and filled.

In some embodiments of the present application, referring to FIGs. 5 and 8, the connecting part 25 has a depth direction and a width direction. In the depth direction, the dimension of the groove 24 is denoted as D₁, and in the width direction, the dimension of the groove 24 is denoted as W₁, where the thickness of the cover plate 212 is denoted as T₁, W₁ = (0.5-1.2) T₁, and D₁ = (0.5-1.0) T₁.

The depth direction of the connecting part 25 may be one of the first direction X and the second direction Y, and the width direction of the connecting part 25 may be the other one of the first direction X and the second direction Y. Referring to FIG. 5, the depth direction of the connecting part 25 may be the second direction Y in the figure, and the width direction may be the first direction X in the figure. Referring to FIG. 8, the depth direction of the connecting part 25 may also be the first direction X in the figure, and the width direction may also be the second direction Y in the figure.

T₁ may refer to the dimension of the cover plate 212 in the second direction Y, where W₂ may refer to the groove width of the groove 24, and W₁ may be, but is not limited to, 0.5 T₁, 0.6 T₁, 0.7 T₁, 0.8 T₁, 0.9 T₁, 1.0 T₁, 1.1 T₁, or 1.2 T₁.

In the technical solution, if W₁ is less than 0.5 T₁, the groove width of the groove 24 is relatively small, and the cast structure formed during the welding of the cover plate 212 and the housing 211 has difficulty entering the groove 24, which is not conducive to alleviating the problem of the weld reinforcement and flanging metal; in addition, the relatively small groove width of the groove 24 also results in a relatively narrow pressure relief channel for the metal vapor, which is not conducive to the metal vapor pressure relief. If W₁ is greater than 1.2 T₁, the groove width of the groove 24 is relatively large, the probability of W₁ being greater than the dimension of the connecting part 25 is increased, and the probability that the cast structure formed during the welding of the cover plate 212 and the housing 211 cannot cover the dimension of the groove 24 in the groove width direction is increased, which is likely to affect the connection reliability of the cover plate 212 and the housing 211. That is, by setting W₁ within the range of 0.5 T₁ to 1.2 T₁, it is beneficial for the cast structure formed during the welding of the cover plate 212 and the housing 211 to more easily enter the groove 24, and it is also beneficial for the metal vapor pressure relief. At the same time, the probability that the cast structure cannot cover the dimension of the groove 24 in the groove width direction can be reduced, thereby improving the connection reliability between the cover plate 212 and the housing 211.

D₁ may refer to the groove depth of the groove 24, and D₁ may be, but is not limited to, 0.5 T₁, 0.6 T₁, 0.7 T₁, 0.8 T₁, 0.9 T₁, or 1.0 T₁.

In the technical solution, if D₁ is less than 0.5 T₁, the groove depth of the groove 24 is relatively small, and the stamping tear zone area that can be removed is limited, which is not conducive to reducing the impact of impurities in the stamping tear zone area on welding; in addition, the groove depth of the groove 24 is relatively small, and the dimension of the groove depth is effective, which is not conducive to alleviating the problem of the weld reinforcement and flanging metal. If D₁ is greater than 1.0 T₁, the groove depth of the groove 24 is relatively large, and the thickness of the stamping tear zone removed from the cover plate 212 is also greater. When the cover plate 212 and the housing 211 are welded, there is a relatively high probability that the cast structure cannot fill the groove 24 in the groove depth direction, which is likely to cause a cavity in the cover plate 212 and affect the strength of the cover plate 212. That is, by setting D₁ within the range of 0.5 T₁ to 1.0 T₁, it is beneficial for removing an appropriate thickness of the stamping tear zone area on the cover plate 212, which is beneficial for reducing the impact of impurities in the stamping tear zone area on welding, and can also reduce the probability that the reliability of the cover plate 212 is affected due to a relatively large dimension of the groove depth of the groove 24.

In the above technical solution, by setting the dimensions D₁ and W₁ of the groove 24 as well as the thickness T₁ of the cover plate 212 so that W₁ is within the range of 0.5 T₁ to 1.2 T₁ and D₁ is within the range of 0.5 T₁ to 1.0 T₁, the groove width and the groove depth of the groove 24 can be kept in appropriate ranges, such that the volume of the stamping tear zone removed from the cover plate 212 is relatively appropriate. Furthermore, the effect of reducing the impact of impurities in the stamping tear zone area on welding is better, and the effect of pressure relief for metal vapor is also better. At the same time, the effect of alleviating the problem of weld reinforcement and flanging metal is also better.

In some embodiments of the present application, W₁ ranges from 0.3 mm to 0.8 mm. It can be understood that W₁ may be, but is not limited to, 0.3 mm, 0.35 mm, 0.40 mm, 0.45 mm, 0.50 mm, 0.55 mm, 0.60 mm, 0.65 mm, 0.70 mm, 0.75 mm, or 0.80 mm.

In the above technical solution, if W₁ is less than 0.3 mm, the groove width of the groove 24 is relatively small, and the cast structure formed during the welding of the cover plate 212 and the shell 211 has difficulty entering the groove 24, which is not conducive to alleviating the problem of the weld reinforcement and flanging metal; in addition, the relatively small groove width of the groove 24 also results in a relatively narrow pressure relief channel for the metal vapor, which is not conducive to the metal vapor pressure relief. If W₁ is greater than 0.8 mm, the probability of W₁ being greater than the dimension of the connecting part 25 is increased, and the probability that the cast structure formed during the welding of the cover plate 212 and the shell 211 cannot cover the dimension of the groove 24 in the groove width direction is increased, which is likely to affect the connection reliability of the cover plate 212 and the housing 211. That is, by setting the groove width W₁ of the groove 24 within the range of 0.3 mm to 0.8 mm, it is beneficial for the cast structure formed during the welding of the cover plate 212 and the housing 211 to more easily enter the groove 24, and it is also beneficial for the metal vapor pressure relief. At the same time, the probability that the cast structure cannot cover the dimension of the groove 24 in the groove width direction is reduced, thereby improving the connection reliability between the cover plate 212 and the housing 211.

In some embodiments of the present application, D₁ ranges from 0.3 mm to 0.6 mm. It can be understood that D₁ may be, but is not limited to, 0.3 mm, 0.35 mm, 0.40 mm, 0.45 mm, 0.50 mm, 0.55 mm, or 0.60 mm.

In the above technical solution, if D₁ is less than 0.3 mm, the groove depth of the groove 24 is relatively small, and the stamping tear zone area that can be removed is limited, which is not conducive to reducing the impact of impurities in the stamping tear zone area on welding; in addition, the groove depth of the groove 24 is relatively small, and the dimension of the groove depth is effective, which is not conducive to alleviating the problem of the weld reinforcement and flanging metal. If D₁ is greater than 0.60 mm, the groove depth of the groove 24 is relatively large, and the thickness of the stamping tear zone removed from the cover plate 212 is also greater. When the cover plate 212 and the housing 211 are welded, there is a relatively high probability that the cast structure cannot fill the groove 24 in the groove depth direction, which is likely to cause a cavity in the cover plate 212 and affect the strength of the cover plate 212. That is, by setting the groove depth D₁ of the groove 24 within the range of 0.3 mm to 0.6 mm, it is beneficial for removing an appropriate thickness of the stamping tear zone area on the cover plate 212, which is beneficial for reducing the impact of impurities in the stamping tear zone area on welding, and can also reduce the probability that the reliability of the cover plate 212 is affected due to a relatively large dimension of the groove depth of the groove 24.

In some embodiments of the present application, the thickness T₂ of the housing 211 ranges from 0.4 mm to 0.6 mm. It can be understood that the thickness T₂ of the housing 211 may be, but is not limited to, 0.4 mm, 0.42 mm, 0.44 mm, 0.46 mm, 0.48 mm, 0.50 mm, 0.52 mm, 0.54 mm, 0.56 mm, 0.58 mm, or 0.60 mm.

In the above technical solution, if the thickness T₂ of the housing 211 is less than 0.4 mm, the strength of the housing 211 is insufficient, affecting the reliability of the housing 211. If the thickness T₂ of the housing 211 is greater than 0.6 mm, although the strength of the housing 211 can satisfy the requirements, the thickness of the housing 211 is relatively large, occupying a relatively large volume in the battery cell 20, which is not conducive to improving the energy density of the battery cell 20. That is, by setting the thickness T₂ of the housing 211 within the range of 0.4 mm to 0.6 mm, the thickness of the housing 211 is kept within an appropriate range, which can not only balance the strength of the housing 211 but also be beneficial for improving the energy density of the battery cell 20.

According to Example 1 of the present application, in the housing assembly 21 of the battery cell 20, the housing 211 is an aluminum housing, and the aluminum housing has a thickness T₂ of 0.4 mm; the peripheral side surface 212a of the cover plate 212 is provided with a groove 24, and the groove 24 is in communication with the outer side surface of the cover plate 212, the width W₁ of the groove 24 being 0.3 mm, and the depth D₁ of the groove 24 being 0.3 mm. Under the assembly condition in which the housing and cover plate have such dimensions, the flanging and the weld reinforcement after welding are both 0 mm.

According to Example 2 of the present application, the structure of the battery cell 20 of Example 2 is substantially the same as that of Example 1. The difference is that the thickness T₂ of the aluminum housing is 0.6 mm, the width W₁ of the groove 24 is 0.8 mm, and the depth D₁ of the groove 24 is 0.6 mm. Under the assembly condition in which the housing and cover plate have such dimensions, the flanging and the weld reinforcement after welding are both 0 mm.

According to Example 3 of the present application, the structure of the battery cell 20 of Example 3 is substantially the same as that of Example 1. The difference is that the peripheral side surface 212a of the cover plate 212 is provided with a groove 24, the cover plate 212 is provided with an extending part 2121 protruding from the peripheral side surface 212a, the extending part 2121 is provided with a first surface 2121a close to the inner side of the cover plate 212, the groove 24 is provided with a second surface 24a away from the inner side of the cover plate 212, and the second surface 24a is flush with the first surface 2121a, such that the cover plate 212 is T-shaped.

In a second aspect, the embodiments of the present application further provide a battery 100. The battery includes the foregoing battery cell 20.

In the above technical solution, for the battery cell 20, by providing the groove 24 on the housing 211 and/or the cover plate 212, the stamping tear zone area on the housing 211 and/or the cover plate 212 can be reduced, and the probability of the formation of weld reinforcement and flanging at the welding joint after welding can be reduced. In addition, pressure relief can be provided for metal vapor formed during subsequent welding, which is beneficial for improving the welding quality and welding stability of the cover plate 212 and the housing 211, thereby improving the reliability of the battery cell 20.

In a third aspect, the embodiments of the present application further provide an electric device. The electric device includes the foregoing battery cell 20 or the foregoing battery 100.

In the above technical solution, for the battery cell 20 or the battery 100, by providing the groove 24 on the housing 211 and/or the cover plate 212, the stamping tear zone area on the housing 211 and/or the cover plate 212 can be reduced, and the probability of the formation of weld reinforcement and flanging at the welding joint after welding can be reduced. In addition, pressure relief can be provided for metal vapor formed during subsequent welding, which is beneficial for improving the reliability of the battery cell 20 or the battery 100, thereby improving the reliability of the electric device.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing assembly, comprising a housing and a cover plate, wherein the housing is provided with an opening, and the opening is lidded with the cover plate; the cover plate is provided with a peripheral side surface, and the peripheral side surface and/or the housing is provided with a groove; a connecting part for sealing the opening is formed between the housing and the cover plate, and the connecting part is at least partially accommodated in the groove;
an electrode terminal, wherein the electrode terminal is arranged on the housing or the cover plate; and
an electrode assembly, wherein the electrode assembly is arranged within the housing and electrically connected to the electrode terminal.

2. The battery cell according to claim 1, wherein an equally dividing plane that equally divides the cover plate in a thickness direction of the cover plate is defined, and the groove is located on one side of the equally dividing plane close to an outside of the cover plate.

3. The battery cell according to claim 1 or 2, wherein the groove is an annular groove provided in a circumferential direction of the cover plate.

4. The battery cell according to claim 1 or 2, wherein the peripheral side surface comprises at least one facet, and each facet is provided with at least one groove; and/or the housing comprises at least one inner side surface, and each inner side surface is provided with at least one groove.

5. The battery cell according to any one of claims 1 to 4, wherein the groove is provided on the peripheral side surface.

6. The battery cell according to claim 5, wherein the groove is in communication with an outer side of the cover plate in the thickness direction of the cover plate.

7. The battery cell according to claim 5, wherein the cover plate is provided with an extending part protruding from the peripheral side surface; the extending part is provided with a first surface close to an inner side of the cover plate, and the groove is provided with a second surface away from the inner side of the cover plate, the second surface being flush with the first surface.

8. The battery cell according to any one of claims 1 to 7, wherein the housing is provided with a clearance recess, and the clearance recess is located on an outer side of the housing and arranged opposite to the groove.

9. The battery cell according to claim 8, wherein the housing is provided with a third surface opposite to the peripheral side surface, and the clearance recess is provided with an clearance surface; the clearance surface is connected to the third surface, and in a direction from inside to outside of the cover plate, a distance between the clearance surface and the third surface gradually increases.

10. The battery cell according to any one of claims 1 to 9, wherein the connecting part has a depth direction and a width direction; in the depth direction, a dimension of the groove is denoted as D₁, and in the width direction, a dimension of the groove is denoted as W₁, wherein a thickness of the cover plate is denoted as T₁, W₁ = (0.5-1.2) T₁, and D₁ = (0.5-1.0) T₁.

11. A battery, comprising the battery cell according to any one of claims 1 to 10.

12. An electric device, comprising the battery cell according to any one of claims 1 to 10 or the battery according to claim 11.
